# EUROPEAN PATENT SPECIFICATION

(11) **EP 2 463 113 B1**
(45) Date of publication and mention of the grant of the patent: **02.10.2013**
(21) Application number: 10194042.7
(22) Date of filing: 07.12.2010
(51) Int. Cl.: B42F 21/02, G09B 19/08

(54) **Dictionary for user friendly access to words**
Wörterbuch für benutzerfreundlichen Zugriff auf Wörter
Dictionnaire pour accès convivial aux mots

(43) Date of publication of application: 13.06.2012
(73) Proprietor: Gastel-Tan, Judy, F-78370 Plaisir (FR)
(72) Inventor: Gastel-Tan, Judy, F-78370 Plaisir (FR)
(74) Representative: Thinat, Michel

(56) References cited:
- AU-A4- 2008 101 099
- DE-C- 516 533
- DE-U1- 29 619 875
- US-A- 5 909 979

## Description

The present invention relates generally to the field of books wherein contents are classified by words naming them and ordered according to characters for spelling the words, comprising yearbooks, calendars, phone books and other directory books, comprising more particularly thesauruses and dictionaries (monolingual, bilingual or multilingual ).

The dictionaries contain generally a lot of words and it is therefore not always easy to reach the relevant page relating to a searched word.

The difficulties of rapid and easy access to a word in the dictionary, presents many drawbacks. For example during a journey, it is inconvenient to look up the dictionary for a long period of time because during this time you risk missing a plane, a train and it takes your attention off a displayed information on the constantly updated panels. Therefore, retrieving a signification or any information from a book and being mindful of the changing environment generates unnecessary stress.

In a bilingual dictionary for example with two directions of translation, the user is not always sure of the direction of translation from a language to the other, which can generate then again extra stress in urgent situations. For instance in the case of a bilingual dictionary wherein a Malay-French translation relates to a first direction and a French-Malay translation relates to a second direction, it is rather confusing as in which direction gets you to the precise word translation you want.

The present invention provides a user friendly dictionary with easy access to words or expressions in a first language (e.g. Malay Language) to get a translation in a second language (e.g. French).

The dictionary comprises:
- a plurality of first sets of one or more pages including each a set of words and/or expressions, which are spelled in the first language with a same initial character, a front page of each said set of one or more pages having on a first edge a tab on which said initial character is written; and
- in each said set of one or more pages, one or more subsets of one or more pages, each including at least one subset of words and/or expressions, which are spelled with a same subsequent character, a front page of each said subset of one or more pages having on a second edge a tab on which said subsequent character is written.

The invention therefore comprises at least two tabs for a searched word. Thus, the dictionary facilitate access to a word by providing the user with an easy and rapid means of retrieving the word in the subset of words having the same initial and the same subsequent character as the word one is looking for.

The documents AU 2008 101 099 A4, DE 296 19 875 U1, DE 516 533 C and US 5 909 979 A each disclose information supports having all the technical features of claim 1 except that the characters are written upside down on pages of the second set when compared to the characters, which are written on pages of the first set.

The invention is useful for translating a word but not only. For example, it can be useful to access a word in the first language to obtain further information relating to the word still in the first language, comprising a signification, an address of a person or anything else.

Particularly in the case of a two way translation between the two languages, for further user friendly access to a second word or expression in the second language to get a translation in the first language, the dictionary comprises:
- a plurality of second sets of one or more pages including each a set of words and/or expressions, which are spelled in the second language with a same initial character, a front page of each said set of one or more pages having on a third edge a tab on which said initial character is written.

According to the invention, characters are written upside down on pages of the second set when compared to the characters, which are written on pages of the first set.

The above recited means help the user when he/she is searching for the signification of a word in the first language and is flipping through the wrong pages or wrong direction of search. The user is immediately prompted by the blatantly obvious upside down characters signalling that he/she is actually looking in the second language by error. Thus, the user will understand he/she has to turn over the book for translations in the first language and subsequently with the guidance of the tabs obtain the desired signification for the searched word.

Combined with the above related feature, tabs are colour coded differently for each language entry, for example blue for Malay Language and red for French Language so as for the user to be immediately prompted by the colour coded tabs when he/she is searching for the signification of a word in the first language and is flipping through the wrong pages or wrong direction of search.

Particularly also, on the tabs of at least one of the edges, the characters are written in alphabetical order by means of viewable Latin letters.

Advantageously in any case, on the tabs of at least one of the edges, the characters are written or also written, embossed or by any other means of printing, in the form of dots recognizable by visually impaired people.

Thus, the user can easily retrieve the suiting page, even when in a dark environment or other inconvenient circumstances which are unfavourable for a correct visibility, for instance the presence of a flaw of ink printed letters or characters.

Moreover, the dictionary is equipped with a pen/pencil that also serves as a reading torch on the unprintable tip. This comes in handy when there is a shortage of luminosity.

Advantageously also, pages of the dictionary comprises a blank zone for adding personal remarks and/or are numbered for the convenience of future referral.

In preferred embodiments of the invention, the dictionary comprises one or more of the following features, a holder dedicated to a pen or pencil, a pen/pencil incorporated with a reading light on the non writable end, a bookmark for better traceability, on a forth edge a spiral coils more preferably comprising an open-close system to facilitate an insertion of periodical updates, a lock system- for example an elastic band or other forms of lock systems for strapping the pages together to better preserve the form of the dictionary and to allow easier storage, and/or one or more pockets ( found on the back of the cover or as an additional bind able page to the book ) for storing flat objects like a CD, a DVD, paper notes, a map, business cards or a credit card.

Preferably, the dictionary has a square size and facilitates to a changeable cover for fun and better personalization.

These and other objects and advantages of the present invention which will become apparent after considering the following detailed specification of preferred embodiments in conjunction with the accompanying drawings wherein:
- FIG. 1 is a schematic view of the front and back cover of the dictionary implementing the invention;
- FIG. 2 is a schematic view of the front and back cover of the dictionary of Fig. 1 after having turning it around;
- FIG. 3 is a schematic view of the inner side of the dictionary of Fig. 1 opened in the middle;
- FIG. 4 is a schematic view of the inner side of the dictionary of Fig. 1 opened at a front page of a first set of words;
- FIG. 5 is a schematic view of a single page of the dictionary of Fig. 1;
- FIG. 6 is a schematic view of the inner side of the dictionary of Fig. 1 opened at a front page of a subset of the first set of words;
- FIG. 7 is a schematic view of the inner side of the dictionary of Fig. 2 opened at a front page of a second set of words;
- FIG. 8 is a schematic view of the reverse side of the cover of the dictionary implementing the invention.

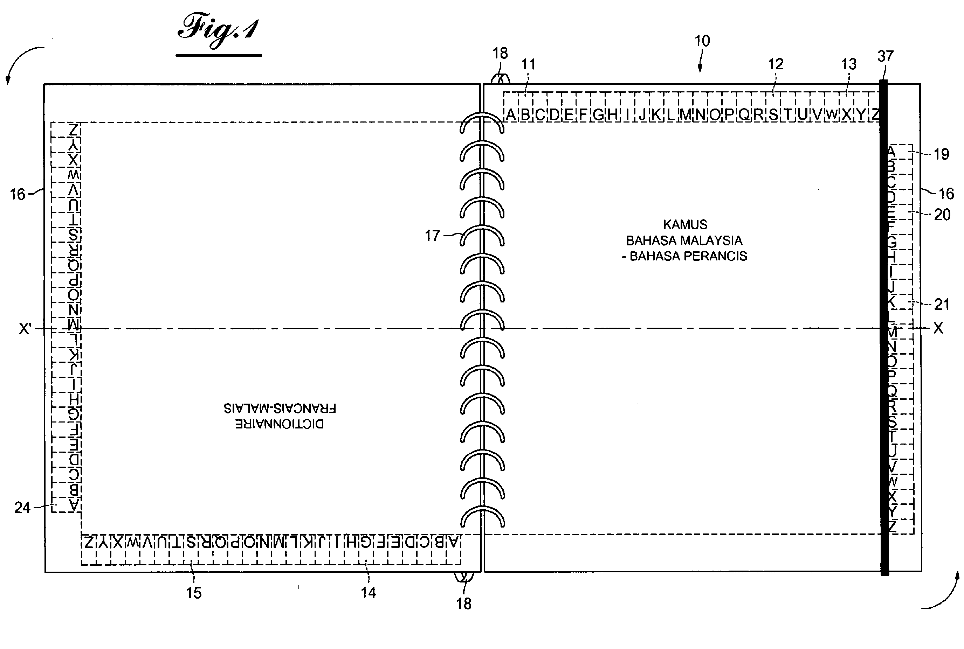

Taking the example of a bilingual dictionary 10 illustrated by Fig. 1, when the dictionary is closed, it has a square size with four edges on each page. On Fig. 1, the dictionary is opened with inner pages facing the table in such a manner that we can see at a same time front and back cover of it on the right side and on the left side. On the part of the cover of the dictionary illustrated by the right side, a readable title indicates a possibility of accessing words or expressions in a first language, which is for example the Malaysian language to get their translations in a second language, which is for example the French language. On the part of the cover of the dictionary illustrated by the left side, a title written with upside down characters indicates a possibility of accessing words or expressions in the second language, which is the French language to get their translations in the first language, which is the Malaysian language.

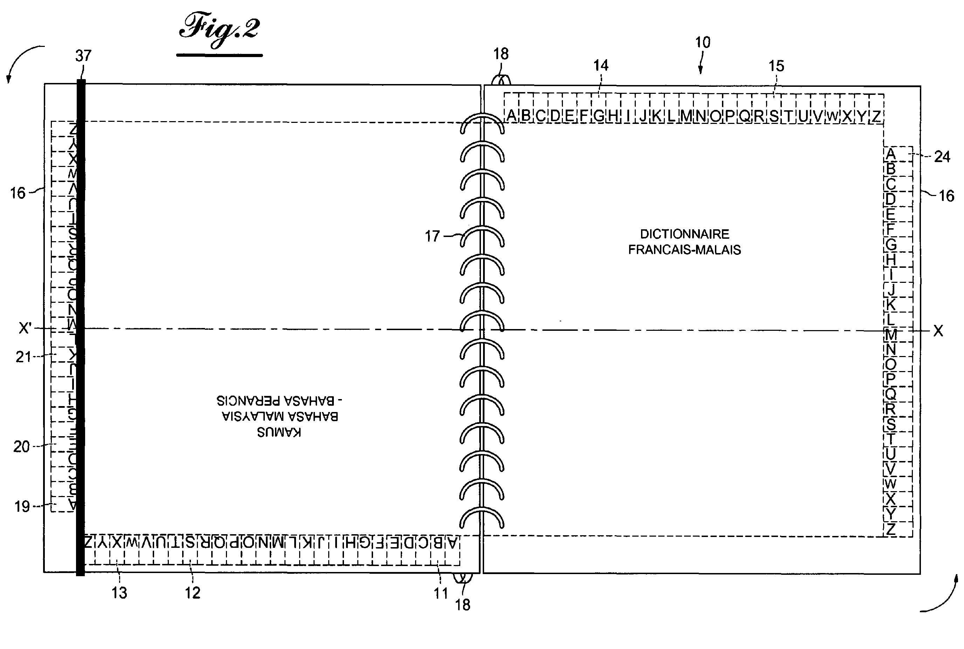

By turning the opened dictionary around an axis, which is perpendicular to the plan of Fig. 1, one obtains the schematic view of Fig.2. On the part of the cover of the dictionary illustrated now by the right side, the title indicating the possibility of accessing words or expressions in the second language, which is the French language to get their translations in the first language, which is the Malaysian language, is now clearly readable. On the part of the cover of the dictionary illustrated now by the left side, the title indicating the possibility of accessing words or expressions in the first language, which is the Malaysian language to get their translations in the second language, which is the French language, is now written with upside down characters.

We can see on Fig. 1 an axis X'X, which is parallel to a top edge of the dictionary. By closing the dictionary of Fig.1 and turning it around the axis X'X, the back cover represented on Fig.1 becomes the front cover represented on Fig.2 and reciprocally the front cover becomes the back cover. The square size of the dictionary in a closed position facilitates other rotations of it as the ones, which are above recited. For example a combination of a rotation around a diagonal with a rotation around the axe, which is perpendicular to the plan of the figure, makes clearly readable on the front cover a title, which was previously written with upside down characters on the back cover.

The dictionary can be dedicated to another first language or to other first and second languages without departing from the invention. The dictionary can also be a multilingual dictionary dedicated to more than two languages without departing from the invention. By the meaning of dictionary, it also includes the thesaurus in monolingual, bilingual and multilingual.

The dictionary includes pages, which are represented in dot lines because they are hidden by the cover.

On a first edge, which is the right top edge on Fig.1 and the left bottom edge on Fig.2, twenty-six tabs 11, 12, 13 comprises each a character, which is a viewable Latin letter written in alphabetical order after the one of a preceding tab.

Each tab 11, 12, 13, is linked with a different front page of a different first set of one or more pages including a set of words or expressions, which are spelled in the first language with a same initial character, which is the one written on the tab. Even when not written in dot lines on Figs. 1 and 2, one should understand that the characters are not visible here because they are hidden by the cover. The cover is larger than the pages so as to protect them and the tabs.

In a closed position of the dictionary, the left side of the cover is folded behind the right side. The dictionary can be opened by picking up the cover from a second edge, which is here the right edge 16.

On a third edge, which is the left bottom edge on Fig.1 and the right top edge on Fig.2, twenty-six tabs 14, 15 comprises each a character, which is a viewable Latin letter written in alphabetical order after the one of a preceding tab.

Each tab 14, 15, is linked with a different front page of a different second set of one or more pages including a set of words or expressions, which are spelled in the second language with a same initial character, which is the one written on the tab.

On a second edge, which is on Fig.1 the right vertical edge for the pages of the first sets and the left vertical edge for the pages of the second sets, tabs 19, 20, 21, 24 comprises each a character, which is a viewable Latin letter written in alphabetical order after the one of a preceding tab.

Each tab 19, 20, 21 of the right vertical side is linked with a different front page of a different subset of one of the first sets of one or more pages including a subset of words or expressions, which are spelled in the first language with a same subsequent character, which is the one written on the tab. Each tab 24 of the left vertical side is linked with a different front page of a different subset of one of the second sets of one or more pages including a subset of words or expressions, which are spelled in the second language with a same subsequent character, which is the one written on the tab.

We can see also extremities of bookmarks 18 sticking out the top and the bottom edge of both the first and the second language for better traceability.

The tabs are behind the cover so that the characters written on the tabs are not visible when the cover is opaque and are visible only through the cover where the cover is transparent.

For ease of explanations in this paragraph, the borders of cover are supposed to be transparent. The characters written on the tabs for the first language are right side up. The characters written on the tabs for the second language are upside down.

In the middle of the opened dictionary is a spiral coil 17 binding the book together. When facing the front cover of the dictionary in a closed position, the spiral coil in on a fourth edge, which is the left edge. The material of the spiral coil 17 can be metal, plastic or a combination of them or of other exploitable materials.

The spiral coil 17 comprises an open-close system like cuffs to facilitate an insertion of periodical updating pages, comprising for example new words, new expressions or newly discovered significations of already listed words. The spiral bound of the entire book or dictionary instead of a typical gluing method provides the user with easier page flipping.

Other binding systems than open-close ones comprising cuffs combined with a spiral coil can be implemented. For example a lock system comprising an elastic band in place of the coil facilitate also an insertion of periodical updating pages.

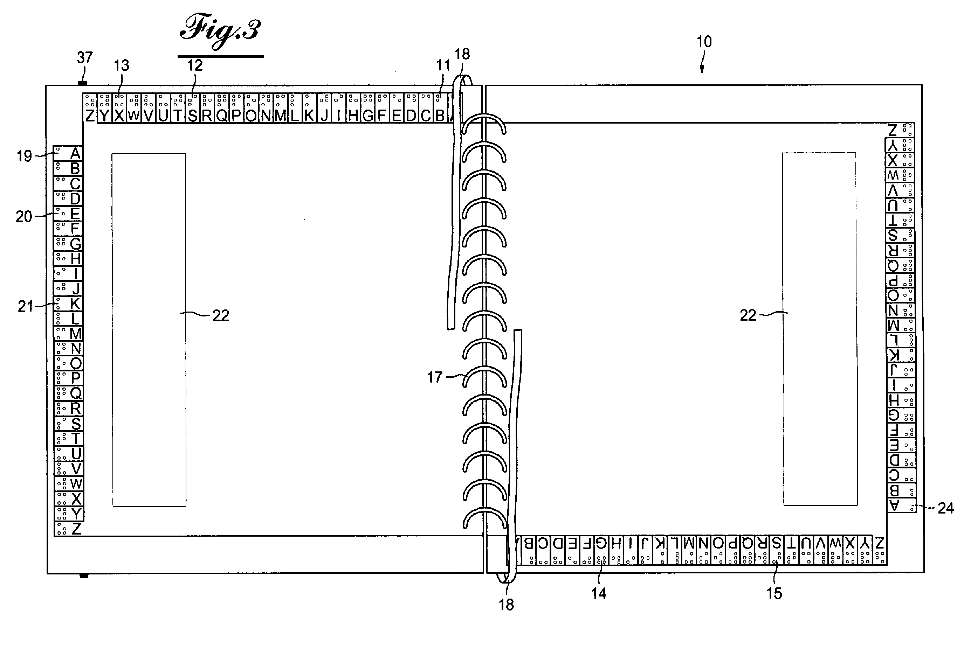

Figure 3 shows the dictionary opened in the middle.
   All the pages relating to the first language are turned over on the left side. The pages relating to the second language remain on the left side written upside down.

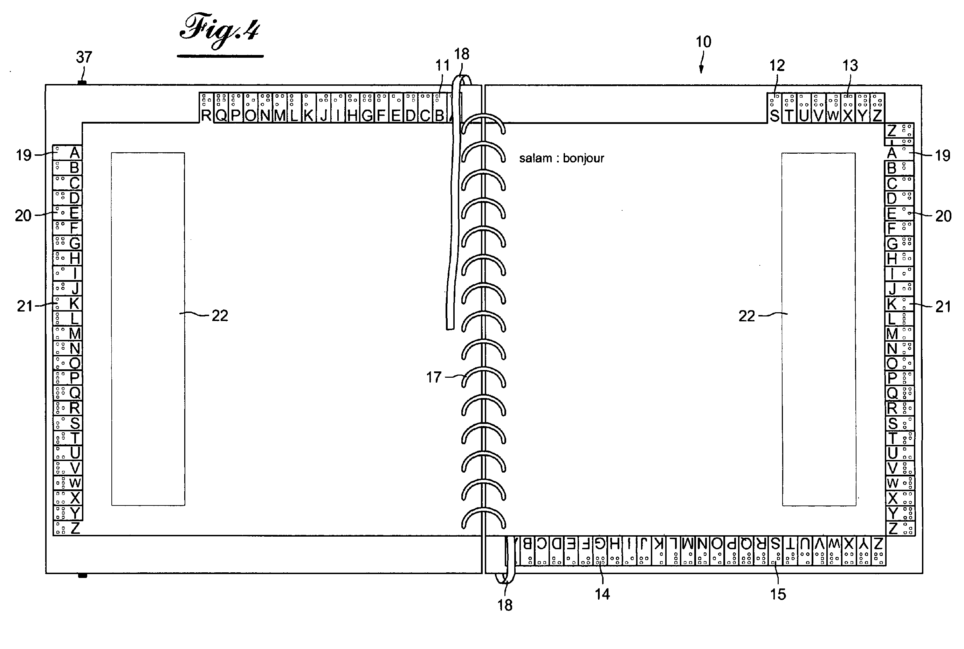

Figure 4 illustrates the dictionary in an opened position for retrieving a word in the first language after having selecting for example the tab 12 comprising the character "S" . We can see here the front page of the set of pages, which includes the words or expressions starting with the initial character "S". The position of the bookmark 18 corresponds to a previous or a present selection of the page for easier retrieval.

The set of pages dedicated to the initial character "S" of words and expressions is divided in subsets of pages, each including a subset of words, which are spelled with a same subsequent character. Each subset of pages has a front page having on the second edge, here the right edge, a tab 19, 20, 21 on which the subsequent character is written. The subsequent character is typically the character following the initial character in the word.

The front page of the subset comprising the words having the opening letter "A" of the alphabet as a subsequent character, is typically the front page of the set. The front page on the right side comprises both the tab 12 and the tab 19 because it is also the front page of the first subset of the set addressed by the tab 12.

When the user searches a translation in the French language of the Malaysian word "salam", he puts a finger on the tab 12 for retrieving the set of words starting with the initial character "S". Here it is not necessary to put a finger on the tab 19 for retrieving the subset of words continuing with the subsequent or following character "A". He can read on the opened page a translation of the Malaysian word "salam", which is the French word "bonjour".

For Malaysian and French language spelling words by using the Latin alphabet, the characters, which are written on the tabs are letters. For other languages using other characters like for example the Hiragana characters in the Japanese language, other than Latin letters would be written on the tabs, for example a different Hiragana character on each tab. Only Hiragana or other characters could be written on the tabs. Both a Hiragana character and a couple of Romaji or Latin letters could also be written on each tab for facilitating retrieval by a user, who is not familiar with Hiragana. For example, a tab of a dictionary for translating Japanese words in the Malaysian language would include only the character " 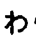 " or both the character " 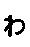 " and the couple of letters "wa". In that way, a Malaysian user visiting Japan and hearing a word starting with the sound "wa" would easily retrieve the set of words starting with that sound and would at the same time progressively learn the Hiragana without effort by simply using regularly her or his dictionary.

On the left side of the opened dictionary illustrated by Fig.4 is the back of the last page of the last subset of the set of words starting in the first language with the letter "R" followed for example by the letter "Z" when words starting with the two letters "RZ" exist in the first language.

When after having found the translation in the second language of the word "salam" in the first language, the user seeks the translation of a word starting with the letter "X" in the first language, the user can select the tab 13 and turning over the pages comprising lead-up tabs to the left.

A further advantage is provided by writing the character not only on the front side of the tabs 12, 13, 19, 20, 21 but also on the back side of the tabs 11, 19, 20, 21.

In that way, the user can access directly to any subset of the set of words starting with the letter "R" in the first language by selecting one of the tabs 19, 20, 21 on the left side of the opened dictionary illustrated by Fig.4 relating to a subsequent character being for example the letter "A", "E" or "K".

In that way, the user can also directly access to any set of words starting with a letter preceding the letter "R" in the first language by selecting one of the tabs 11 on the left side of the opened dictionary illustrated by Fig.4 relating to an initial character being for example the letter "B".

In the opened state of the bilingual dictionary illustrated by Fig.4 for accessing significations of words of the first language, the pages relating to significations of words of the second language are on the right side behind the pages relating to significations of words of the first language.

On the bottom edge, we can see the back side of the tabs 14, 15 pertaining to pages including words starting with an initial character in the second language being for example the letter "G" or "S". When the characters are written on the back side of the tabs 14, 15, the user sees them written upside down so as to recognize their belonging to the other language and not to the current accessed language.

Each page comprises also a blank zone 22, which is for example a column on the right side or on the left side of the page, providing the user with a possibility of adding personal remarks and adapting certain interpretations of a word.

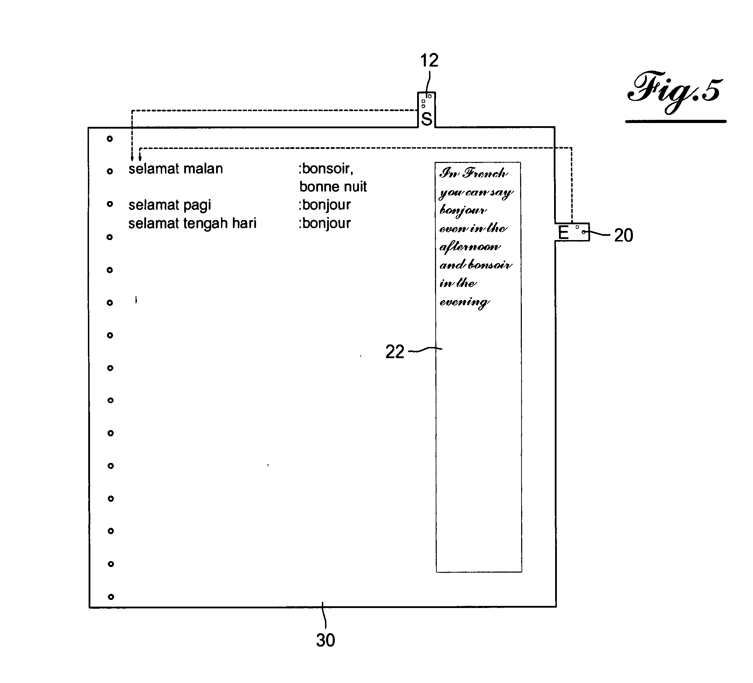

FIG. 5 is a schematic view of a single page 30 before to be inserted in the dictionary of Fig. 1. We note that the reference 30 of the page illustrated by Fig.5 is not necessarily the number of the page in the dictionary.

When the page 30 is the front page of the set of words having the letter "S" as an initial character, the page comprises the tab 12 on the top side at a position, which suits for its insertion in the dictionary. The page 30 can also comprise the tab 12 when it is not the front page so that the user knows at any time the initial letter of the words included in the currently opened page of the dictionary. The page 30 can also comprise the tab 12 independently of being or not the front page of the set so that the page can become at any time a front page, for example when preceding pages of the set are extracted out of the dictionary because out of use. In that way it is possible to lighten the dictionary at any time in a future use.

When the page 30 is the front page of the subset of words having the letter "E" as a subsequent character, the page comprises the tab 20 on the edge opposite to the one of the biding at a position, which suits for its insertion in the dictionary. The page 30 can also comprise the tab 20 when it is not the front page of the subset so that the user knows at any time the subsequent letter of the words included in the currently opened page of the dictionary. The page 30 can also comprise the tab 20 independently of being or not the front page of the subset so that the page can become at any time a front page, for example when preceding pages of the subset are extracted out of the dictionary because out of use. In that way it is possible to lighten again the dictionary at any time in a future use.

Let us now come back to Fig.3 after having inserted the page 30 at a correct place in the bilingual dictionary.

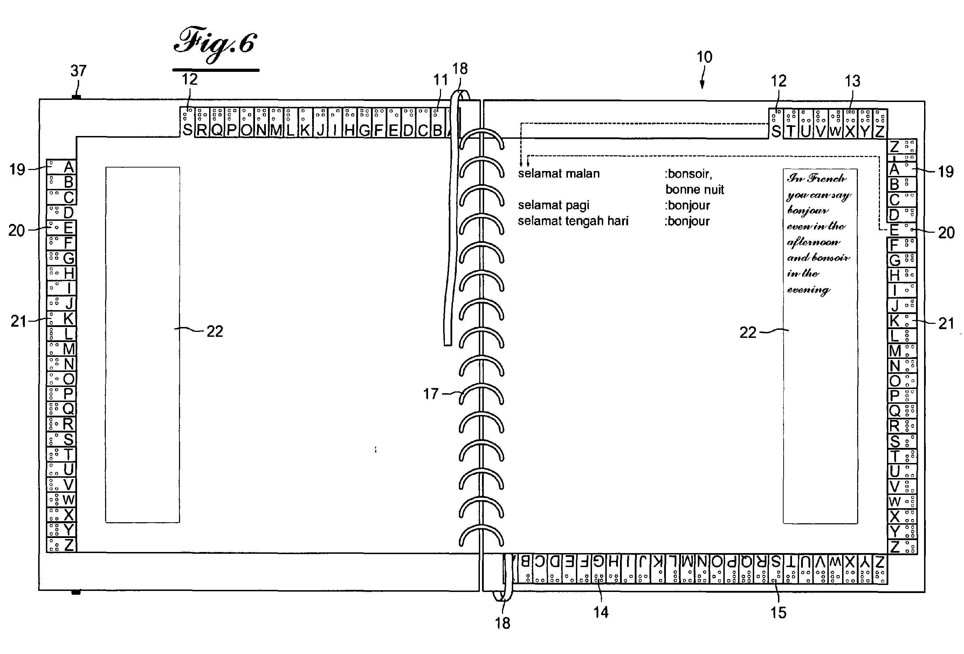

In the case of the Malaysian-French dictionary illustrated by the figures, the user needing to say "good morning" to a waiter in Paris, would put a finger on the tab 20 comprising the subsequent character "E" for access to the word "selamat" used in different Malaysian expressions for saying "good morning" in the Malaysian language. In that way, the user would open the dictionary at the page illustrated by figure 6.

At the opened page, the user would find French translations for different expressions meaning "good morning", "good afternoon" and "good night" in the Malaysian language.

The user has handwritten some comments in the zone 22 precising the periods of the day for using "bonjour" and "bonsoir" in the French language.

In a similar way, the set of pages comprising the words starting with the initial character "T" comprises subsets of pages having each a front page linked with a tab comprising a subsequent character on the right side of the front page. The tabs of the subsets are not visible on figure 6 when they are occulted by the tabs 19, 20, 21, relating to the set of words starting with the initial character "S".

Advantageously, the characters are written on the tabs of at least one of the edges, by means of dots recognizable by blind people. For example, the system of coding invented by Louis Braille in 1821 for Latin letters and Arab numbers is used in most of the European languages. Adaptations of the Braille system exist now for characters of other languages, which use other characters than Latin letters and Arab numbers.

The Braille coding, when used alone for writing the characters on the tabs, is of course interesting for users able to read Braille symbols, particularly the blind people but it is also interesting for other people having knowledge of the Braille symbols.

The Braille symbols on the tabs are useful also for people having a good visual perception but in a dark environment or in a conversation with somebody else. In that later case, the user can continue looking at his or her interlocutor in the face and simultaneously retrieving the designated tabs by the feel on his/her finger tip and eventually turning the pages directly to the ones containing the words starting with the initial character of the searched word or better directly to the pages containing the words starting with the two initial characters of the searched word. The user needs only to duck rapidly one's head for having a glance on the retrieved page, reading quickly the relevant words and looking again the interlocutor in the face. The Braille symbols on the tabs are useful as well when looking on signalling panels for example to orientate oneself in an airport. It is sometime worthy not to loose time when catching a plane. The dictionary of the invention with Braille symbols allows the user to search at the same time the relevant pages by touching the tabs with the fingers and the relevant panels with his or her eyes. Many other advantages will be gradually discovered by the user operating his or her dictionary.

We have seen here the utility of the Braille symbols on the tabs of a book which is not specifically a book for blind people.

A combination of the Braille symbols with visible letters has a further technical effect, which is explained now. A user not having the knowledge of the Braille system, will only read the visible characters on the tabs in a first phase. But in the same time, the user will touch the tab with a finger for opening the book, particularly the dictionary on the relevant page. The user will subconsciously learn, in other words without difficulty, an association between the touched Braille symbol and the viewed ink printed character. In situations wherein it is difficult to read the ink printed characters but not impossible, the user will progressively unintentionally prefer to retrieve the relevant tab by touching it and probably simply verifying a correct association with relevant character by a rapid glance on it in a second phase. Developing a habit of touching before reading with eyes and progressively unconsciously trusting himself for retrieving the relevant tab only by touching without looking at it for verification, the user will in a third phase only look on the page already selected by the tabs to further retrieve the relevant word amongst others by reading them with his or her eyes.

The combination of character letters with Braille symbols can be implemented on the dictionary of figures 1 to 3 by adding Braille symbols on the tabs, for example on the reverse side of the tabs, the foreside remains for the ink printed characters or they could coexisting alongside each other.

The dictionary 10 illustrated by figure 6, implements the combination of character letters with Braille symbols as it can be seen on tabs 11, 12, 13, 14, 15, 19, 20, 21 on a same side of the tabs.

The dictionary 10 has preferably a square size again, particularly for easily turning it around and over in different directions.

Each set of pages listing French words as an entry word to be translated and starting with a same initial character or letter, comprises similarly subsets of French words listing each, words continuing with a same subsequent character or letter. Each subset is signalled again by a tab 24 on the right side, which is not visible on figure 6 because most of the tabs 24 are occulted by the tabs 19, 20, 21 relating to the set of Malaysian words starting with the initial character "S". Exceptions can exist, for example the tab attached to a page comprising French entry words with the letter Z as a subsequent character is visible on the top of the right edge because there are no tabs for subsets of Malaysian entry words on that place. We note that the letter Z is written upside down on that tab.

In the dictionary 10 illustrated by figures 1 and 2, the first edge, which is the top edge and the third edge, which is the bottom edge, are parallel to a same axis X'X, represented on figures 1 and 2. The words and the expressions to be accessed in the first language, which is here the Malaysian language, are readable when the third edge is viewed on the top side of the axis X'X as illustrated in figure 1. The words and the expressions to be accessed in the second language, which is here the French language, are readable when the first edge is viewed on the same top side of the axis X'X as illustrated in figure 2. In the position represented in figure 1, the front cover indicates a dictionary Malaysian language to French language. In the position represented in figure 2, the front cover indicates a dictionary French language to Malaysian language. The title on the back cover is written in both cases with upside down letters. The passage from the position of figure 1 to the position of figure 2, and reciprocally, is obtained by turning the dictionary around the axis X'X after having closed an reopen the dictionary. The passage from the position of figure 1 to the position of figure 2, and reciprocally, can also be obtained by turning the dictionary around another axis than the axis X'X, for example around an axis, which is perpendicular to the plan of the figure without closing first the book.

In this manner, the words of the dictionary French language to Malaysian language, are upside down when the cover indicates the dictionary Malaysian language to French language of figure 1 and the words of the dictionary Malaysian language to French language, are upside down when the cover indicates the dictionary French language to Malaysian language of figure 2.

The user sees immediately if he is using the relevant dictionary part of reversed two languages dictionary, even for words, which are similar in the two languages because in the irrelevant dictionary part, the words will be read upside down, in other terms not readable.

The relevant position of the dictionary can be detected by means combining another function with purpose of compactness.

For example, the dictionary 10, comprises a lock system-elastic band 37 for strapping the pages together to better preserve the form of the dictionary and to allow easier storage when it is closed. In a preferred embodiment of the invention, the band 37 referred on figure 3 is fixed on the right upper corner and on the right lower corner of the cover side indicating the Malaysian language to French language dictionary. With reference to figures 1 and 2, the movable part of the band 37 crosses the right side of the cover face indicating the French language to Malaysian language dictionary after having closed it.

By means of the band 37, the user can rapidly recognise the cover side of the dictionary facing him or her without the need to look at it in a first place. For example, slightly touching the coil 17 by griping the dictionary in her or his hands, the user can detect the left side of the closed dictionary and consequently determine which the relevant side is. By brushing the right side with the thumb, the user recognizes the cover face indicating the French language to Malaysian language dictionary facing him or her when he or she moves the crossing part of the band 37 represented on figure 1. By brushing the right side with the thumb, the user recognizes the cover face indicating the French language to Malaysian language dictionary facing him or her when he or she does not bump the crossing or the movable part of the band 37.

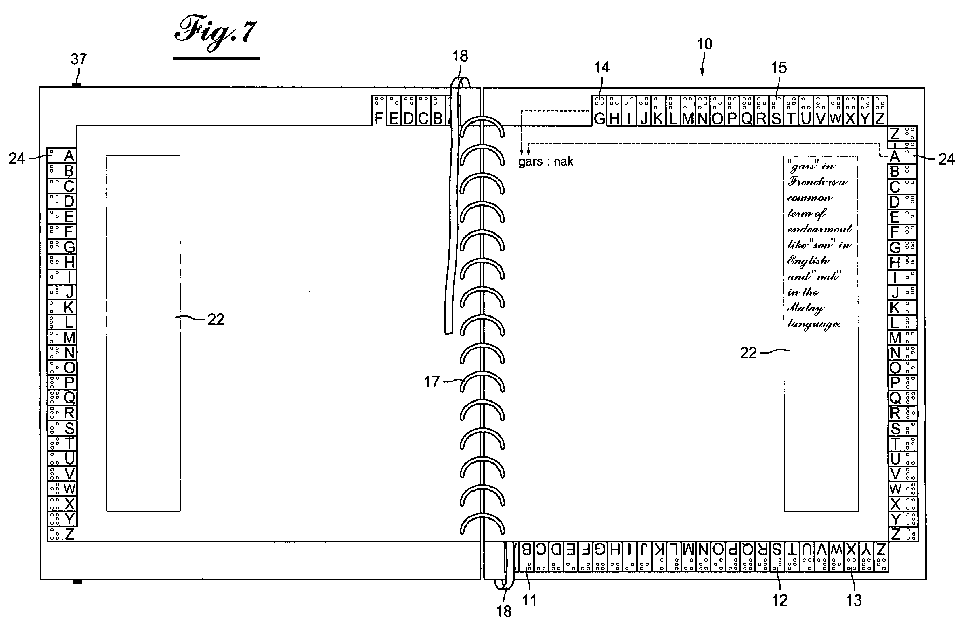

Figure 7 illustrates the dictionary in an opened position after having selecting for example the tab 14 comprising the character "G" on the top edge when the French to Malaysian language part of the dictionary is already facing the user with the characters presented in a right side up way.

The state of the dictionary illustrated by Fig.7 can also be reached from the state illustrated by Fig.6. On Fig.6, the user would select the back side of the tab 14, which is on the bottom edge and turn over the pages which are over the last page linked with the tab 14, to the left side. In this manner, the user would get almost the state of the dictionary illustrated by Fig.7 except for the characters viewable upside down. The user would rotate the opened dictionary for reading the characters in a right side up manner instead of an upside down manner. After the 180° rotation of the opened book, the user obtains the state illustrated by Fig.7.

The set of pages of words and expressions dedicated to the initial character "G" is divided again in subsets of pages, each including a subset of words, which are spelled with a same subsequent character. Each subset of pages has a front page on the second edge, here the right edge, a tab 24, on which the subsequent character is written.

The front page of the subset comprising the words having the letter "G" of the alphabet as a subsequent character, follows typically the last page of the subset comprising the words having the letter "A" of the alphabet as a subsequent character when they exist for words having the letter "G" of the alphabet as an initial character. Otherwise the front page of the subset comprising the words having the letter "A" of the alphabet as a subsequent character, is also the front page of the set of words having the letter "G" of the alphabet as an initial character. In other terms, a subset for each potentially subsequent character of words does not necessarily exist. Consequently, a tab for each character of an alphabet does not necessarily exist on the edge 36 of the dictionary.

When the user searches a translation in the Malaysian language of the French word "gars", he or she puts a finger on the tab 14 for retrieving the set of words starting with the initial character "G". He or she puts thereafter a finger on the tab 24 for retrieving the subset of words continuing with the subsequent or following character "A". He or she can read on the opened page a translation of the French word "gars", which is the Malaysian word "nak".

The page comprises again the blank zone 22 for adding personal remarks by means of a pen or a pencil 47. The pen or the pencil can be independent of the dictionary or incorporated to it by means of a holder 49 dedicated to it. The pen/pencil comes with a reading light 48 on the non writing end of it.

Pages can be numbered for the convenience of future referral.

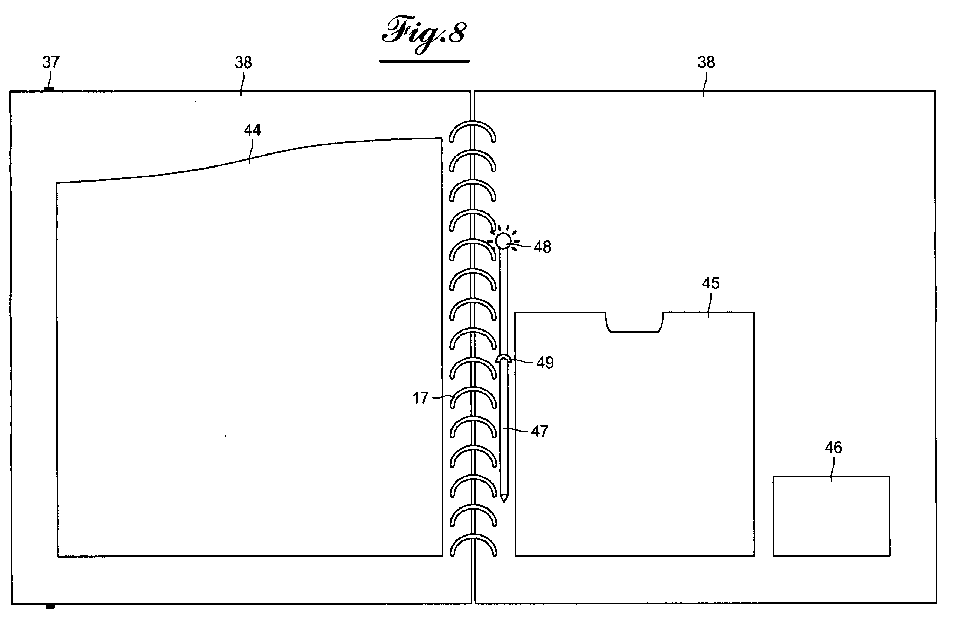

With reference to figure 8, the inner/reverse side of the cover 38 of the dictionary comprises one or more pockets 44, 45, 46 for storing flat objects like a CD, a DVD, paper notes, a map or a credit card. These storage pockets can also be an additional bind able page of the book instead of being on the back of the cover. In this manner, the dictionary can have another function than purely retrieving words and their signification. The user does not need to have many objects in the hand at a same time, for example by checking at the desk of a hotel.

A changeable cover provides fun and better personalization. In that way, the dictionary is more than a book, it is a travelling companion.

We note the advantages of the dictionary according to the invention over usual dictionaries, which are well adapted for translations by reading or writing books, letters and so on but are less adapted to oral dialog or other living situations on travel. The structure of the dictionary according to the invention permits the user to swap rapidly from a language to the other, which is useful in a dialog context.

For example a French man just arriving in Kuala Lumpur with a bilingual dictionary according to the invention in the hands, meets a nice small boy saying him "selamat pagi". The man rapidly access the page illustrated by Fig.6 by sensing the Brail characters of the tabs 12 and 20, still looking on the small boy. Reading shortly the translation, which is "bonjour", the man wishes to kindly reply "bonjour mon petit gars" in the own language of the nice boy. Still reading the expression "selamat pagi" for rapidly learning it, the structure of the tabs allows him to already select the tab 14 by sensing the Brail character "G", to turn over the pages for accessing the French word "gars". Reading rapidly the associated translation "nak", the man faces soon again the nice boy enabled to say him "selamat pagi nak".

Other embodiments, uses and advantages of the present invention will be apparent to those skilled in the art from consideration of the specification and practice of the invention disclosed herein. The specification and examples should be considered exemplary only. The intended scope of the invention is only limited by the claims appended hereto.

Particularly, other books than above described dictionaries can be developed using the means according to the invention. Particularly also, above described dictionaries and/or other books than above described dictionaries can be developed using the tabs according to the invention wherein a codification by relief dots for blind people exist for other characters than Latin letters.

## Claims

1. A dictionary (10) comprising:
- for user friendly access to a first word or expression in a first language:
- a plurality of first sets of one or more pages including each a set of words, which are spelled in the first language with a same initial character, at least a front page of each said set of one or more pages having on a first edge a tab (11, 12, 13) on which said initial character is written; and
- in each said set of one or more pages, one or more subsets of one or more pages, each including at least one subset of words, which are spelled with a same subsequent character, at least a front page of each said subset of one or more pages having on a second edge (16) a tab (19, 20, 21) on which said subsequent character is written;
- for further user friendly access to a second word or expression in a second language to get a translation in the first language:
- a plurality of second sets of one or more pages including each a set of words, which are spelled in the second language with a same initial character, at least a front page of each said set of one or more pages having on a third edge a tab (14, 15) on which said initial character is written,
wherein characters are written upside down on pages of the second set when compared to the characters, which are written on pages of the first set.

2. The dictionary according to anyone of preceding claims, wherein on the tabs of at least one of the edges, the characters are written in alphabetical order by means of viewable Latin letters.

3. The dictionary according to anyone of preceding claims, wherein on the tabs of at least one of the edges, the characters are written or also written by means of dots recognizable by blind people.

4. The dictionary according to anyone of preceding claims, wherein a page comprises a blank zone (22) for adding personal remarks.

5. The dictionary according to anyone of preceding claims, comprising a holder dedicated to a pen or pencil.

6. The dictionary according to anyone of preceding claims, comprising a bookmark (18) for better traceability.

7. The dictionary according to anyone of preceding claims, comprising a spiral coils (17) on a fourth edge.

8. The dictionary according to anyone of preceding claims, comprising on a fourth edge an open-close system to facilitate an insertion of pages containing periodical updates.

9. The dictionary according to anyone of preceding claims, wherein pages are numbered for the convenience of future referral.

10. The dictionary according to anyone of preceding claims, comprising one or more pockets (44, 45, 46) for storing flat objects like a CD, a DVD, paper notes, a map, business cards or a credit card.

11. The dictionary according to anyone of preceding claims, comprising a lock system-elastic band or other forms of lock systems (37) for strapping the pages together to better preserve the form of the dictionary and to allow easier storage.

12. The dictionary according to anyone of preceding claims, having a square size.

13. The dictionary according to anyone of preceding claims, comprising a changeable cover for fun and better personalization.

## Patentansprüche

1. Wörterbuch (10), umfassend:
- für einen benutzerfreundlichen Zugriff auf ein erstes Wort oder einen ersten Ausdruck in einer ersten Sprache:
- eine Vielzahl von ersten Sätzen von einer oder mehreren Seiten, die jeweils einen Satz von Wörtern enthalten, die in der ersten Sprache mit einem gleichen Anfangszeichen buchstabiert werden, wobei zumindest eine Vorderseite jedes Satzes von einer oder mehreren Seiten auf einem ersten Rand ein Register (11, 12, 13) aufweist, in das das Anfangszeichen geschrieben ist; und
- in jedem Satz von einer oder mehreren Seiten einen oder mehrere Teilsätze von einer oder mehreren Seiten, die jeweils zumindest einen Teilsatz von Wörtern enthalten, die mit einem gleichen darauffolgenden Zeichen buchstabiert werden, wobei zumindest eine Vorderseite jedes Teilsatzes von einer oder mehreren Seiten auf einem zweiten Rand (16) ein Register (19, 20, 21) aufweist, in das das darauffolgende Zeichen geschrieben ist;
- für einen benutzerfreundlichen Zugriff auf ein zweites Wort oder einen zweiten Ausdruck in einer zweiten Sprache, um eine Übersetzung in der ersten Sprache zu erhalten:
- eine Vielzahl von zweiten Sätzen von einer oder mehreren Seiten, die jeweils einen Satz von Wörtern enthalten, die in der zweiten Sprache mit einem gleichen Anfangszeichen buchstabiert werden, wobei zumindest eine Vorderseite jedes Satzes von einer oder mehreren Seiten auf einem dritten Rand ein Register (14, 15) aufweist, in das das Anfangszeichen geschrieben ist,
wobei die Zeichen auf Seiten des zweiten Satzes im Vergleich zu den auf Seiten des ersten Satzes geschriebenen Zeichen umgedreht geschrieben sind.

2. Wörterbuch nach einem der vorstehenden Ansprüche, wobei die Zeichen auf den Registern zumindest einer der Ränder in sichtbaren lateinischen Buchstaben in alphabetischer Reihenfolge geschrieben sind.

3. Wörterbuch nach einem der vorstehenden Ansprüche, wobei die Zeichen auf den Registern zumindest einer der Ränder mit für Blinde erkennbaren Punkten geschrieben oder auch damit geschrieben sind.

4. Wörterbuch nach einem der vorstehenden Ansprüche, wobei eine Seite einen leeren Bereich (22) zum Hinzufügen von persönlichen Anmerkungen umfasst.

5. Wörterbuch nach einem der vorstehenden Ansprüche, das eine für einen Schreibstift oder Bleistift vorgesehene Halterung umfasst.

6. Wörterbuch nach einem der vorstehenden Ansprüche, das ein Lesezeichen (18) für eine bessere Nachverfolgbarkeit umfasst.

7. Wörterbuch nach einem der vorstehenden Ansprüche, das an einem vierten Rand Spiralwindungen (17) umfasst.

8. Wörterbuch nach einem der vorstehenden Ansprüche, das an einem vierten Rand ein System zum Öffnen und Schließen umfasst, um ein Einfügen von Seiten zu erleichtern, die periodische Aktualisierungen enthalten.

9. Wörterbuch nach einem der vorstehenden Ansprüche, wobei Seiten für eine leichtere künftige Bezugnahme nummeriert sind.

10. Wörterbuch nach einem der vorstehenden Ansprüche, das eine oder mehrere Taschen (44, 45, 46) zum Aufbewahren von flachen Objekten wie eine CD, eine DVD, Papiernotizen, eine Landkarte, Visitenkarten oder eine Kreditkarte umfasst.

11. Wörterbuch nach einem der vorstehenden Ansprüche, das ein elastisches Band als Verriegelungssystem oder andere Formen von Verriegelungssystemen (37) zum Zusammenschnallen der Seiten umfasst, um die Form des Wörterbuchs besser zu bewahren und eine leichtere Aufbewahrung zu ermöglichen.

12. Wörterbuch nach einem der vorstehenden Ansprüche, das eine viereckige Form aufweist.

13. Wörterbuch nach einem der vorstehenden Ansprüche, das aus Spaß und für eine bessere individuelle Anpassung einen austauschbaren Einband umfasst.

## Revendications

1. Dictionnaire (10) comprenant:
pour un accès convivial à un premier mot ou expression dans une première langue:
une pluralité de premiers ensembles d'une ou de plusieurs pages comprenant chacun un ensemble de mots qui sont orthographiés dans la première langue avec un même caractère initial, au moins une première page de chacun desdits ensembles d'une ou de plusieurs pages ayant sur un premier bord, un onglet (11, 12, 13) sur lequel ledit caractère initial est écrit; et
dans chacun desdits ensembles d'une ou de plusieurs pages, un ou plusieurs sous-ensembles d'une ou de plusieurs pages, comprenant chacun au moins un sous-ensemble de mots qui sont orthographiés avec la même lettre suivante, au moins une première page de chacun desdits sous-ensembles d'une ou de plusieurs pages ayant sur un deuxième bord (16), un ergot (19, 20, 31) sur lequel ladite lettre suivante est écrite;
pour un accès convivial à un second mot ou expression dans une seconde langue pour obtenir une traduction dans la première langue:
une pluralité de seconds ensembles d'une ou de plusieurs pages comprenant chacune un ensemble de mots qui sont orthographiés dans la seconde langue avec un même caractère initial, au moins une première page de chacun desdits ensembles d'une ou de plusieurs pages ayant sur un troisième bord, un ergot (14, 5) sur lequel ledit caractère initial est écrit,
dans lequel les caractères sont écrits à l'envers sur les pages du second ensemble par rapport aux caractères qui sont écrits sur les pages du premier ensemble.

2. Dictionnaire selon l'une quelconque des revendications précédentes, dans lequel sur les ergots d'au moins l'un des bords, les caractères sont écrits dans l'ordre alphabétique au moyen de lettres latines visibles.

3. Dictionnaire selon l'une quelconque des revendications précédentes, dans lequel sur les ergots d'au moins l'un des bords, les caractères sont écrits ou également écrits au moyen de points reconnaissables par des personnes aveugles.

4. Dictionnaire selon l'une quelconque des revendications précédentes, dans lequel une page comprend une zone vierge (22) pour ajouter des remarques personnelles.

5. Dictionnaire selon l'une quelconque des revendications précédentes, comprenant un support dédié à un stylo ou un crayon.

6. Dictionnaire selon l'une quelconque des revendications précédentes, comprenant un marque-page (18) pour un meilleur suivi.

7. Dictionnaire selon l'une quelconque des revendications précédentes, comprenant des spirales (17) sur un quatrième bord.

8. Dictionnaire selon l'une quelconque des revendications précédentes, comprenant sur un quatrième bord, un système d'ouverture - fermeture pour faciliter une insertion de pages contenant des mises à jour périodiques.

9. Dictionnaire selon l'une quelconque des revendications précédentes, dans lequel les pages sont numérotées pour la praticité d'une consultation ultérieure.

10. Dictionnaire selon l'une quelconque des revendications précédentes, comprenant une ou plusieurs poches (44, 45, 46) pour stocker des objets plats, comme un CD, un DVD, des notes papiers, une carte, des cartes de visite ou une carte de crédit.

11. Dictionnaire selon l'une quelconque des revendications précédentes, comprenant une bande élastique de système de verrouillage ou d'autres formes de systèmes de verrouillage (37) pour attacher les pages ensemble pour une meilleure conservation de la forme du dictionnaire et permettre un rangement plus facile.

12. Dictionnaire selon l'une quelconque des revendications précédentes, ayant une taille carrée.

13. Dictionnaire selon l'une quelconque des revendications précédentes, comprenant une couverture pouvant être changée pour le plaisir et une meilleure personnalisation.
